# EUROPEAN PATENT SPECIFICATION

(11) **EP 2 701 563 B1**
(45) Date of publication and mention of the grant of the patent: **10.06.2015**
(21) Application number: 12717133.8
(22) Date of filing: 26.04.2012
(51) Int. Cl.: A47J 31/44, G01C 19/40

(54) **A WEIGHING DEVICE FOR AN ESPRESSO COFFEE MACHINE AND AN ESPRESSO COFFEE MACHINE INCORPORATING SUCH A DEVICE**
WÄGEVORRICHTUNG FÜR EINE ESPRESSOKAFFEEMASCHINE UND ESPRESSOKAFFEEMASCHINE MIT EINER SOLCHEN VORRICHTUNG
DISPOSITIF DE PESÉE POUR MACHINE À CAFÉ ESPRESSO ET MACHINE À CAFÉ ESPRESSO INCORPORANT UN TEL DISPOSITIF

(30) Priority: 26.04.2011 IE 20110204
(43) Date of publication of application: 05.03.2014
(73) Proprietor: La Marzocco S.r.l., 50038 Scarperia (IT); Moran, Sean Martin, Dublin 6 (IE); Pearson, Paul Drewry, Letterkenny, County Donegal (IE); Stack, Paul Francis, Dublin 16 (IE)
(72) Inventor: MORAN, Sean Martin, Dublin 6 (IE); PEARSON, Paul Drewry, Letterkenny County Donegal (IE); STACK, Paul Francis, Dublin 16 (IE); BIANCHI, Roberto, I-50019 Sesto Fiorentino Firenze (IT)
(74) Representative: Colombo, Stefano Paolo
(86) International application number: PCT/EP2012/057612
(87) International publication number: WO 2012/146641

(56) References cited:
- WO-A1-2010/131242
- DE-A1- 2 048 163
- DE-A1- 3 332 236
- US-A1- 2004 118 618
- US-A1- 2009 205 875

## Description

### Technical Field

This invention relates to a weighing device for a coffee machine and, in particular, to a weighing device for an espresso coffee machine and to an espresso coffee machine incorporating such a device.

By an espresso coffee machine in this context is meant a coffee machine, for use in professional food service and 'horeca' (hotel/restaurant/catering) applications.

### Background Art

DE 33 32 236 A1 discloses a method and device for drawing off drinks.

In an espresso coffee machine the coffee grinds are tamped (pressed) into a portafilter, which is a portable receptacle for holding the grinds, and having a filter in the base thereof. The portafilter is then attached to a group, which is a connection on the machine through which the brewing water is delivered. Water, at brewing temperature, is forced from the group, through the coffee grinds in the portafilter, into a receiving cup to produce a traditional Italian coffee beverage called an espresso. A single espresso is known as a shot.

An example of an espresso machine of the type in question is the La Marzocco Strada (La Marzocco is a trade mark) produced by La Marzocco SRL., Scarperia, Florence, Italy.

Varying the quantity of coffee grinds used, the fineness of the grind, the amount of pressure used to tamp the grinds, the water pressure in the machine and the length of time to produce the shot will all have an effect on the final quality of the shot. A recent innovation in the delivery of espressos is the measuring the weight of the brewed espresso to ensure that the brew is optimised.

In order to produce a consistent shot from a particular machine a barista has to experiment by varying the above parameters. This is known as "dialling in" an espresso and is currently done by eye and taste. A typical workflow is as follows:
1. Weigh the amount of coffee used;
2. Weigh the final espresso beverage produced;
3. Note the grind setting on the grinder;
4. Note the time for the espresso to brew;
5. Having fixed on a ratio of dry coffee to brewed espresso which the barista is happy with, (s)he can now adjust the grind setting, which directly impacts the speed at which the espresso shot flows from the machine.

For example, if the grind is made coarser, the shot production speeds up. Conversely, if the grind is made finer, the shot production will be slowed down.

A problem with this method of dialling in an espresso is that the volume of liquid in each shot is being estimated by eye. Thus, it is the barista who starts and stops the delivery of each espresso. Thus, the quality of espresso can vary from shot to shot.

Furthermore, the quantity of crema (crema is the creamy head produced on top of the espresso) produced in the espresso cup can have an influence on the barista's estimate of the volume of liquid in the cup.

A further problem is that a weighing scales is required to weigh the final espresso beverage produced. This will take up space on the counter top, which has cost implications in a commercial setting.

It is an object of the present invention to overcome the disadvantages of the espresso coffee machines hereinbefore described.

### Disclosure of Invention

Thus, the invention provides a weighing device for an espresso coffee machine, the device comprising a weighing platform locatable in the drip tray area of the espresso coffee machine under a group thereof, a control unit connected to the weighing platform, a start/stop button, a timer unit and a display all being connected to the control unit, such that, in use, the weight of a brewed shot and the time taken to deliver it are measured by the weighing platform and the timer unit respectively, with the results being shown on the display.

An advantage of the weighing device according to the invention is that, the weight of the brewed shot is measured as it is being brewed, as is the time taken to deliver it. Thus, the barista can use these two measurements to decide when to terminate the brewing.

A further advantage is that the weighing device takes up no extra space on a counter top, as it is locatable in the drip tray area of the espresso coffee machine. In a busy coffee shop or restaurant setting, counter space is at a premium and thus any space saved makes economic sense.

Preferably, the start/stop button is the button on the espresso machine for controlling the delivery of the shot.

An advantage of this feature is that the weighing device is wired up to the espresso machine and the barista only needs to operate one button to start to brew a shot.

Further, preferably, in use, the control unit causes the weight shown on the display, after an empty cup has been placed on the weighing platform, to be zeroed when the start/stop button is pressed to start the delivery of a shot.

An advantage of this feature is that the weight of the liquid in the cup is automatically displayed rather than it being necessary to subtract the weight of the cup manually.

In one embodiment of the weighing device according to the invention, the display is located adjacent the weighing platform.

When a barista is preparing an espresso he will habitually be looking at the coffee entering the cup. Thus, an advantage of having the display adjacent the weighing platform is that the barista can be checking the display while at the same time watching the coffee entering the cup.

In a further embodiment of the weighing device according to the invention, the display is locatable on a front panel of the espresso machine.

An advantage of having the display on a front panel of the espresso machine is that, where a number of shots are being produced at the same time, the barista can more easily keep an eye on each display.

In a further embodiment of the weighing device according to the invention, the control unit is programmable to automatically deliver a set weight of brewed shot.

An advantage of delivering a pre-programmed weight of brewed shot is that once the barista has arrived at the parameters for delivering a desired brewed shot, for a particular batch of coffee, the weight of this brewed shot can be used to reproduce the desired brewed shot automatically.

In a further embodiment of the weighing device according to the invention, the control unit measures the flow rate, during delivery of a brewed shot, with the flow rate being expressed as a ratio between the weight of the brewed shot and the elapsed time since the start of delivery.

Being able to measure the flow rate is advantageous, as the barista can use this parameter in his efforts to produce a consistent shot.

Preferably, the flow rate is shown on the display.

Further, preferably, the flow rate is adjustable.

An advantage of an ability to adjust the flow rate is that variations, such as in the fineness of the coffee grinds, the environmental humidity or the compaction of the coffee grinds in the portafilter, can be compensated for so as to maintain the consistency of the brewed shot.

In a further aspect of the invention there is provided an espresso coffee machine, comprising a weighing platform locatable in the drip tray area of the espresso coffee machine under a group thereof, a control unit connected to the weighing platform, a start/stop button, a timer unit and a display all being connected to the control unit, such that, in use, the weight of a brewed shot and the time taken to deliver it are measured by the weighing platform and the timer unit respectively, with the results being shown on the display.

The advantages of the espresso coffee machine according to the invention are referred to above.

Preferably, the start/stop button is the button on the espresso machine for controlling the delivery of the shot.

An advantage of this feature is that the barista only needs to operate one button to start to brew a shot.

Further, preferably, in use, the control unit causes the weight shown on the display, after an empty cup has been placed on the weighing platform, to be zeroed when the start/stop button is pressed to start the delivery of a shot.

An advantage of this feature is that the weight of the liquid in the cup is automatically displayed rather than it being necessary to subtract the weight of the cup manually.

In one embodiment of the espresso coffee machine according to the invention, the display is located adjacent the weighing platform.

The advantage of this feature has been referred to above.

In a further embodiment of the espresso coffee machine according to the invention, the display is locatable on a front panel thereof.

An advantage of having the display on a front panel of the espresso machine is that, where a number of shots are being produced at the same time, the barista can more easily keep an eye on each display.

In a further embodiment of the invention, the control unit is housed on a circuit board of the machine.

An advantage of this feature is that if the weighing platform becomes faulty it can be replaced without having to also replace the control unit.

In a further embodiment of the invention, the weighing device and the control unit are located within a housing, which housing is locatable in the drip tray.

An advantage of this feature is that a faulty weighing device can be replaced as a unit.

In a further embodiment of the espresso coffee machine according to the invention, the control unit is programmable to automatically deliver a set weight of brewed shot.

As indicated above, an advantage of delivering a pre-programmed weight of brewed shot is that once the barista has arrived at the parameters for delivering a desired brewed shot, for a particular batch of coffee, the weight of this brewed shot can be used to reproduce the desired brewed shot automatically.

In a further embodiment of the espresso machine according to the invention, the control unit measures the flow rate, during delivery of a brewed shot, with the flow rate being expressed as a ratio between the weight of the brewed shot and the elapsed time since the start of delivery.

Being able to measure the flow rate is advantageous, as the barista can use this parameter in his efforts to produce a consistent shot.

Preferably, the flow rate is shown on the display.

Further, preferably, the flow rate is adjustable.

An advantage of an ability to adjust the flow rate is that variations, such as in the fineness of the coffee grinds, the environmental humidity or the compaction of the coffee grinds in the portafilter, can be compensated for so as to maintain the consistency of the brewed shot.

### Brief Description of Drawings

The invention will be further illustrated by the following description of an embodiment thereof, given by way of example only with reference to the accompanying drawings in which:
Fig. 1 is a front elevation of an espresso coffee machine incorporating a weighing device in accordance with the invention;
Fig. 2 is a plan view from above of the drip tray of the espresso machine of Fig. 1;
Fig. 3 is a side view of the espresso machine of Fig 1;
Fig. 4 is a front elevation of the weighing device, removed from the espresso machine of Fig. 1;
Fig. 5 is a side view of the weighing device of Fig. 4;
Fig. 6 is a plan view from above of the weighing device of Fig. 4; and
Fig. 7 is a cross-section on the line VII -VII of Fig. 6.

### Mode of Carrying Out the Invention

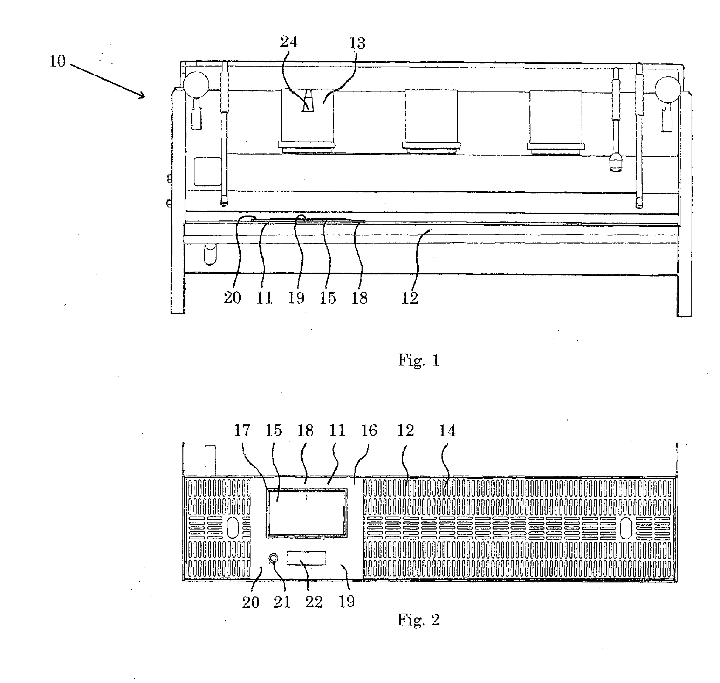

Referring to Fig.1, there is illustrated generally at 10, an espresso coffee machine incorporating a weighing device 11 in accordance with the invention. The weighing device 11 is located in a drip tray 12 of the espresso coffee machine 10 under a group 13 thereof.

Referring to Fig. 2, the drip tray 12 is shown from above. A perforated drainer 14 is located in the drip tray 12. A section of the perforated drainer 14 has been removed so that the weighing device 11 can be accommodated in the drip tray 12.

The weighing device 11 includes a weighing platform 15, located within a housing 16, which weighing platform 15 is accessible through an opening 17 in a top plate 18 of the housing 16. The top plate 18 rests on the perforated drainer 14 to each side of the section, which has been removed. Top surface 19 of weighing platform 15 of the weighing device 11 is proud of surface 20 of the top plate 18 (see Fig.1).

A start/stop button 21 is located in the top plate 18, and extends above the surface 19 thereof.

A display 22 is set into the top plate 18, flush with the surface 20 thereof. The display 22 is a Liquid Crystal Display (LCD).

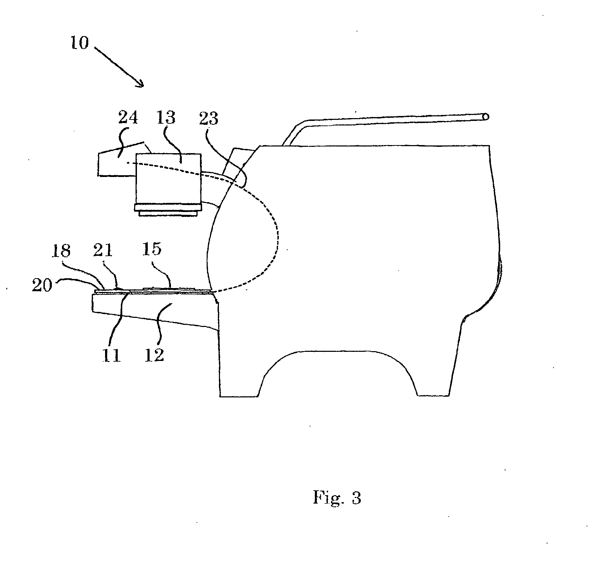

Referring to Fig. 3 the espresso coffee machine 10 is seen from the side. The start/stop button 21 and the weighing platform 15 are proud of the surface 20 of the top plate 18.

A dashed line 23 indicates an electrical connection between the weighing device 11 and a start extraction button (not shown) on a pressure adjusting handle 24 (see also Fig. 1) mounted on the group 13. In use, movement of the pressure adjusting handle 24 initiates delivery of a shot from the group 13, which movement also activates the weighing device 11 in one mode of operation.

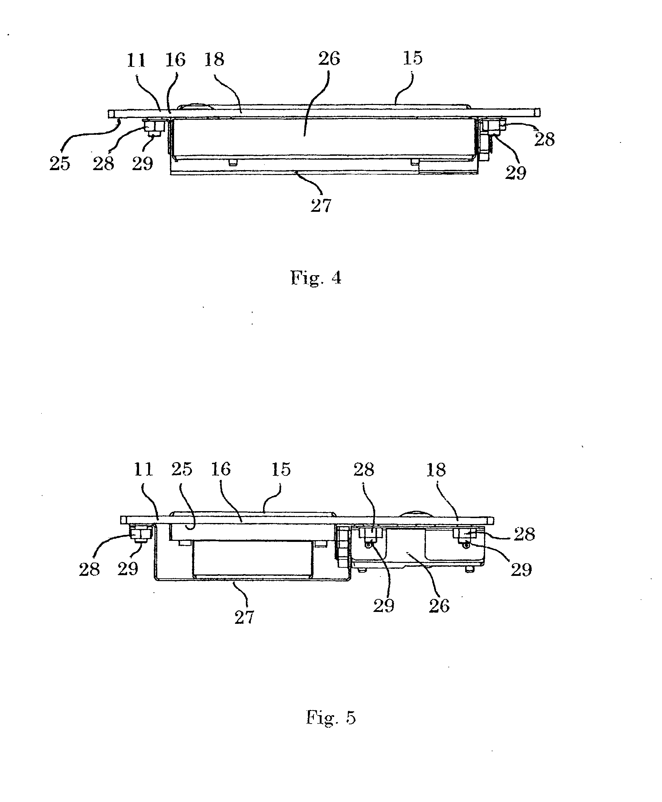

Referring to Figs. 4 to 7 the weighing device 11 is shown in more detail.

Referring to Figs. 4 and 5 the housing 16 includes the top plate 18 to the underside 25 of which are fixed a front enclosed compartment 26 and a rear shelf 27 with nuts 28 and bolts 29.

The weighing platform 15 is mounted on the shelf 27 (see Fig. 5).

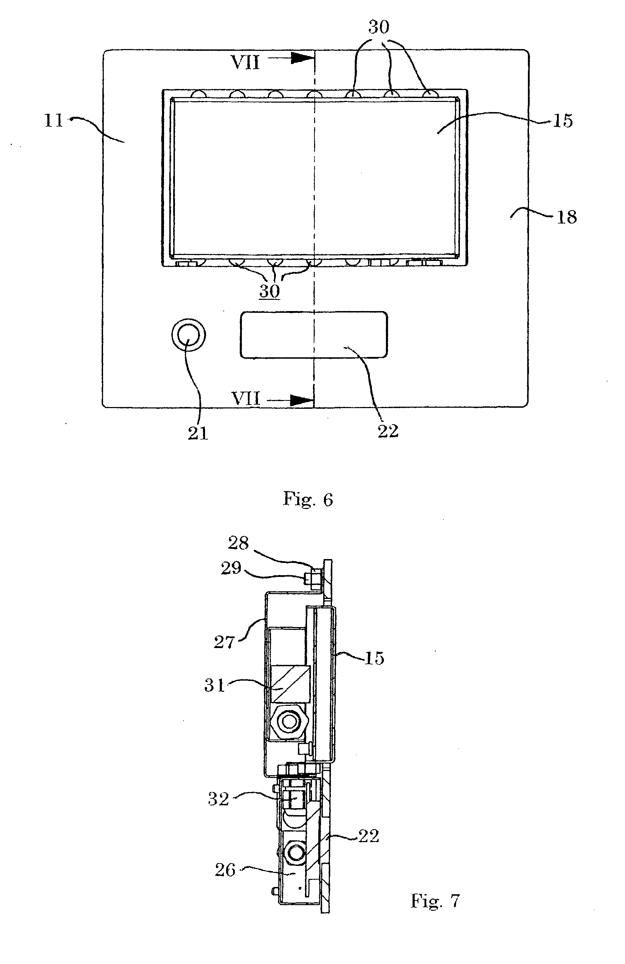

Referring to Fig. 6 the weighing device 11 is seen from above. A plurality of drain holes 30 are drilled through the shelf 27, and these drain holes 30 allow any spills around the weighing platform 15, in use, to drain away to the drip tray 12.

Referring to Fig. 7 the weighing platform 15 sits on a load cell 31. A control unit 32, incorporating a timer (not shown separately), is located in the front enclosed compartment 26.

Referring to Figs. 1 to 7, in use, the espresso coffee machine 10 can be operated in at least two modes.

In the first mode the operational flow is generally as follows:
1. Grind a chosen dose of dry coffee into a portafilter (not shown;
2. Insert the portafilter into the espresso coffee machine group 13;
3. Operate the start extraction button on the pressure adjusting handle 24 to start delivery of a shot;
   a. Through an electrical connection to the weighing device 11, this also immediately zeroes (tares) the weighing device 11 and starts the timer;
   b. A digital readout on the display 22 shows the barista the weight of the shot and the elapsed time side-by side;
4. Position espresso cups/cappuccino cups/paper cups on the weighing platform 15 under the portafilter/ group 13;
   a. The weighing device 11 detects a change in load greater than would be expected through production of the beverage and "auto-tares" the weighing device 11;
   b. The brew flows into the cups until the barista stops the pour by operating the start extraction button again;
   c. When the pour is stopped, the timer is stopped;
   d. The LCD readout now tells the barista both the final shot weight and the time of the shot.

With this workflow the barista can taste the delivered shot, and if he is unhappy he can adjust the grind to speed up or slow down delivery of the preferred brew ratio, thus calibrating the "perfect" shot.

Alternatively the auto-tare function on the weighing device 11 can be disabled, and a resultant workflow would be as follows:
1. Grind a chosen dose of dry coffee into the portafilter;
2. Insert the portafilter into the espresso coffee machine group 13;
3. Position espresso cups/cappuccino cups/paper cups on the weighing platform 15 under the portafilter/group 13;
4. Operate the start extraction button on the pressure adjusting handle 24 to start delivery of a shot;
   a. Through an electrical connection to the weighing device 11, this also immediately zeroes (tares) the weighing device 11 and starts the timer;
   b. A digital readout on the display 22 shows the barista the weight of the shot and the elapsed time side-by side;
   c. The brew flows into the cups until the barista stops the pour by operating the start extraction button again;
   d. When the pour is stopped, the timer is stopped;
   e. The digital readout now tells the barista both the final shot weight and the time of the shot.

## Claims

1. A weighing device (11) for an espresso coffee machine (10), the device comprising a weighing platform (15) locatable in the drip tray (12) area of the espresso coffee machine (10) under a group thereof, a control unit (32) connected to the weighing platform (15), a start/stop button (21),the weighing device (11) being **characterized in that** it comprises a timer unit and a display (22) all being connected to the control unit (32), such that, in use, the weight of a brewed shot and the time taken to deliver it are measured by the weighing platform (15) and the timer unit respectively, with the results being shown on the display (22).

2. A weighing device according to Claim 1, wherein the start/stop button (21) is the button on the espresso machine for controlling the delivery of the shot.

3. A weighing device according to Claim 1 or 2, wherein, in use, the control unit (32) causes the weight shown on the display, (22) after an empty cup has been placed on the weighing platform (15), to be zeroed when the start/stop button (21) is pressed to start the delivery of a shot.

4. A weighing device according to any one of Claims 1 to 3, wherein the display (22) is located adjacent to the weighing platform (15).

5. A weighing device according to any one of Claims 1 to 3, wherein the display (22) is locatable on a front panel of the espresso machine.

6. A weighing device according to any preceding claim, wherein the control unit (32) is programmable to automatically deliver a set weight of brewed shot.

7. A weighing device according to any preceding claim, wherein the control unit (32) measures the flow rate, during delivery of a brewed shot, with the flow rate being expressed as a ratio between the weight of the brewed shot and the elapsed time since the start of delivery.

8. A weighing device according to Claim 7, wherein the flow rate is shown on the display (22).

9. A weighing device according to Claim 7 or 8, wherein the flow rate is adjustable.

10. An espresso coffee machine (10) comprising a weighing platform (15) locatable in the drip tray (12) area of the espresso coffee machine (10) under a group thereof, a control unit (32) connected to the weighing platform (15), a start/stop button (21), the machine (10) being **characterized in that** it comprises a timer unit and a display (22) all being connected to the control unit (32), such that, in use, the weight of a brewed shot and the time taken to deliver it are measured by the weighing platform (15) and the timer unit respectively, with the results being shown on the display (22).

11. An espresso coffee machine according to Claim 10, wherein the start/stop button (21) is the button on the espresso machine for controlling the delivery of the shot.

12. An espresso coffee machine according to Claim 10 or 11, wherein, in use, the control unit (32) causes the weight shown on the display (22), after an empty cup has been placed on the weighing platform (15), to be zeroed when the start/stop button (21) is pressed to start the delivery of a shot.

13. An espresso coffee machine according to any one of Claims 10 to 12, wherein the display (22) is located adjacent to the weighing platform (15).

14. An espresso machine according to any one of Claims 10 to 12, wherein the display (22) is locatable on a front panel thereof.

15. An espresso machine according to any one of Claims 10 to 14, wherein the control unit (32) is housed on a circuit board of the machine.

16. An espresso machine according to any one of Claims 10 to 14, wherein the weighing device (11) and the control unit (32) are located within a housing (16), which housing (16) is locatable in the drip tray (12).

17. An espresso machine according to any one of Claims 10 to 16, wherein the control unit (32) is programmable to automatically deliver a set weight of brewed shot.

18. An expresso machine according to any one of Claims 10 to 17, wherein the control unit (32) measures the flow rate, during delivery of a brewed shot, with the flow rate being expressed as ratio between the weight of the brewed shot and the elapsed time since the start of delivery.

19. An espresso machine according to Claim 18, wherein the flow rate is shown on the display (22).

20. An espresso machine according to Claim 18 or 19, wherein the flow rate is adjustable.

## Patentansprüche

1. Wägevorrichtung (11) für eine Espressokaffeemaschine (10), welche aufweist:
Unter einem Aggregat der Letzteren eine in dem Bereich der Tropfschale (12) der Espressokaffeemaschine (10) lokalisierbare Wägeplattform (15), eine mit der Wägeplattform (15) verbundene Steuereinheit (32), einen Start/Stopp-Knopf (21),
wobei die Wägevorrichtung (11)
**dadurch gekennzeichnet ist,**
**dass** sie eine Zeitmesseinheit und eine Anzeige (22), welche alle mit der Steuereinheit (32) verbunden sind, aufweist, derart, dass im Gebrauch das Gewicht eines gebrühten Getränks und die zu dessen Abgeben genommene Zeit von der Wägeplattform (15) beziehungsweise der Zeitmesseinheit gemessen werden,
wobei die Resultate auf der Anzeige (22) angezeigt werden.

2. Wägevorrichtung nach Anspruch 1, wobei der Start/Stopp-Knopf (21) der Knopf an der Espressomaschine zum Steuern der Abgabe des Getränks ist.

3. Wägevorrichtung nach Anspruch 1 oder 2, wobei in Gebrauch die Steuereinheit (32) bewirkt, dass das Gewicht, welches auf der Anzeige (22) angezeigt wird, nachdem eine leere Tasse auf der Wägeplattform (15) platziert wurde, auf Null gesetzt wird wenn der Start/Stopp-Knopf (21) gedrückt wird, um die Abgabe eines Getränks zu starten.

4. Wägeplattform nach einem der Ansprüche 1 bis 3, wobei die Anzeige (22) angrenzend an die Wägeplattform (15) lokalisiert ist.

5. Wägevorrichtung nach einem der Ansprüche 1 bis 3, wobei die Anzeige (22) auf einer Frontplatte der Espressomaschine lokalisierbar ist.

6. Wägevorrichtung nach einem der vorhergehenden Ansprüche, wobei die Steuereinheit (32) programmierbar ist, um automatisch ein festgelegtes Gewicht des gebrühten Getränks abzugeben.

7. Wägevorrichtung nach einem der vorhergehenden Ansprüche, wobei die Steuereinheit (32) während der Abgabe eines gebrühten Getränks den Durchfluss misst, wobei der Durchfluss als Verhältnis zwischen dem Gewicht des gebrühten Getränks und der vergangenen Zeit seit dem Start der Abgabe ausgedrückt wird.

8. Wägevorrichtung nach Anspruch 7, wobei der Durchfluss auf der Anzeige (22) gezeigt wird.

9. Wägevorrichtung nach Anspruch 7 oder 8, wobei der Durchfluss verstellbar ist.

10. Espressokaffeemaschine (10), welche aufweist: Unter einem Aggregat der Letzteren eine in dem Bereich der Tropfschale (12) der Espressokaffeemaschine (10) lokalisierbare Wägeplattform (15), eine mit der Wägeplattform (15) verbundene Steuereinheit (32), einen Start/Stopp-Knopf (21), wobei die Maschine (10)
**dadurch gekennzeichnet ist,**
**dass** sie eine Zeitmesseinheit und eine Anzeige (22), welche alle mit der Steuereinheit (32) verbunden sind, aufweist, derart, dass im Gebrauch das Gewicht eines gebrühten Getränks und die zu dessen Abgeben genommene Zeit von der Wägeplattform (15) beziehungsweise der Zeitmesseinheit gemessen werden, wobei die Resultate auf der Anzeige (22) angezeigt werden.

11. Espressokaffeemaschine nach Anspruch 10, wobei der Start/Stopp-Knopf (21) der Knopf auf der Espressokaffeemaschine zum Steuern der Abgabe des Getränks ist.

12. Espressokaffeemaschine nach Anspruch 10 oder 11, wobei im Gebrauch die Steuereinheit (32) bewirkt, dass das Gewicht, welches auf der Anzeige (22) angezeigt wird, nachdem eine leere Tasse auf der Wägeplattform (15) platziert wurde, auf Null gesetzt wird wenn der Start/Stopp-Knopf (21) gedrückt wird, um die Abgabe eines Getränks zu starten.

13. Espressokaffeemaschine nach einem der Ansprüche 10 bis 12, wobei die Anzeige (22) angrenzend an die Wägeplattform (15) lokalisiert ist.

14. Espressomaschine nach einem der Ansprüche 10 bis 12, wobei die Anzeige (22) auf einer Frontplatte der Espressomaschine lokalisierbar ist.

15. Espressomaschine nach einem der Ansprüche 10 bis 14, wobei die Steuereinheit (32) auf einer Leiterplatte der Maschine untergebracht ist.

16. Espressomaschine nach einem der Ansprüche 10 bis 14, wobei die Wägevorrichtung (11) und die Steuereinheit (32) innerhalb eines Gehäuses (16) lokalisiert sind, wobei das Gehäuse (16) in der Tropfschale (12) lokalisierbar ist.

17. Espressomaschine nach einem der Ansprüche 10 bis 16, wobei die Steuereinheit (32) programmierbar ist, um automatisch ein festgelegtes Gewicht des gebrühten Getränks abzugeben.

18. Espressomaschine nach einem der Ansprüche 10 bis 17, wobei die Steuereinheit (32) während der Abgabe eines gebrühten Getränks den Durchfluss misst, wobei der Durchfluss als Verhältnis zwischen dem Gewicht des gebrühten Getränks und der vergangenen Zeit seit dem Start der Abgabe ausgedrückt wird.

19. Espressomaschine nach Anspruch 18, wobei der Durchfluss auf der Anzeige (22) gezeigt wird.

20. Espressomaschine nach Anspruch 18 oder 19, wobei der Durchfluss verstellbar ist.

## Revendications

1. Dispositif de pesée (11) pour une machine à café expresso (10), le dispositif comprenant une plateforme de pesée (15) pouvant être positionnée dans une zone de plateau ramasse-gouttes (12) de la machine à café expresso (10) sous son groupe, une unité de commande (32) raccordée à la plateforme de pesée (15), un bouton marche / arrêt (21), le dispositif de pesée (11) étant **caractérisé en ce qu'**il comprend une unité de minuterie et un écran (22), tous étant raccordés à l'unité de commande (32), de sorte que, à l'usage, le poids d'une charge infusée et le temps pris pour la distribuer sont mesurés par la plateforme de pesée (15) et l'unité de minuterie respectivement, dont les résultats sont représentés sur l'écran (22).

2. Dispositif de pesée selon la revendication 1, dans lequel le bouton marche / arrêt (21) est le bouton sur la machine expresso pour commander la distribution de la charge.

3. Dispositif de pesée selon la revendication 1 ou 2, dans lequel, à l'usage, l'unité de commande (32) amène le poids affiché sur l'écran (22), après qu'une tasse vide a été placée sur la plateforme de pesée (15), à être remis à zéro lorsque le bouton marche / arrêt (21) est enfoncé pour démarrer la distribution d'une charge.

4. Dispositif de pesée selon l'une quelconque des revendications 1 à 3, dans lequel l'écran (22) est positionné de manière adjacente à la plateforme de pesée (15).

5. Dispositif de pesée selon l'une quelconque des revendications 1 à 3, dans lequel l'écran (22) peut être positionné sur un panneau avant de la machine expresso.

6. Dispositif de pesée selon l'une quelconque des revendications précédentes, dans lequel l'unité de commande (32) est programmable pour délivrer automatiquement un poids de consigne de charge infusée.

7. Dispositif de pesée selon l'une quelconque des revendications précédentes, dans lequel l'unité de commande (32) mesure le débit, pendant la distribution d'une charge infusée, dont le débit est exprimé comme un rapport entre le poids de la charge infusée et le temps écoulé depuis le début de la distribution.

8. Dispositif de pesée selon la revendication 7, dans lequel le débit est affiché sur l'écran (22).

9. Dispositif de pesée selon la revendication 7 ou 8, dans lequel le débit est ajustable.

10. Machine à café expresso (10) comprenant une plateforme de pesée (15) pouvant être positionnée dans la zone de plateau ramasse-gouttes (12) de la machine à café expresso (10) sous son groupe, une unité de commande (32) raccordée à la plateforme de pesée (15), un bouton marche / arrêt (21), la machine (10) étant **caractérisée en ce qu'**elle comprend une unité de minuterie et un écran (22), tous étant raccordés à l'unité de commande (32), de sorte que, à l'usage, le poids d'une charge infusée et le temps pris pour la distribuer sont mesurés par la plateforme de pesée (15) et l'unité de minuterie respectivement, dont les résultats sont affichés sur l'écran (22).

11. Machine à café expresso selon la revendication 10, dans laquelle le bouton marche / arrêt (21) est le bouton sur la machine expresso pour commander la distribution de la charge.

12. Machine à café expresso selon la revendication 10 ou 11, dans laquelle, à l'usage, l'unité de commande (32) amène le poids affiché sur l'écran (22), après qu'une tasse vide a été placée sur la plateforme de pesée (15), à être mis à zéro lorsque le bouton marche / arrêt (21) est enfoncé pour démarrer la distribution d'une charge.

13. Machine à café expresso selon l'une quelconque des revendications 10 à 12, dans laquelle l'écran (22) est positionné de manière adjacente à la plateforme de pesée (15).

14. Machine à café expresso selon l'une quelconque des revendications 10 à 12, dans laquelle l'écran (22) peut être positionné sur son panneau avant.

15. Machine à café expresso selon l'une quelconque des revendications 10 à 14, dans laquelle l'unité de commande (32) est logée sur une carte de circuit imprimé de la machine.

16. Machine à café expresso selon l'une quelconque des revendications 10 à 14, dans laquelle le dispositif de pesée (11) et l'unité de commande (32) sont positionnés à l'intérieur d'un boîtier (16), lequel boîtier (16) peut être positionné dans le plateau ramasse-gouttes (12).

17. Machine à café expresso selon l'une quelconque des revendications 10 à 16, dans laquelle l'unité de commande (32) est programmable pour délivrer automatiquement un poids de consigne de charge infusée.

18. Machine expresso selon l'une quelconque des revendications 10 à 17, dans laquelle l'unité de commande (32) mesure le débit, pendant la distribution d'une charge infusée, dont le débit est exprimé comme un rapport entre le poids de la charge infusée et le temps écoulé depuis le début de la distribution.

19. Machine expresso selon la revendication 18, dans laquelle le débit est affiché sur l'écran (22).

20. Machine expresso selon la revendication 18 ou 19, dans laquelle le débit est ajustable.
